# EUROPÄISCHE PATENTSCHRIFT

(11) **EP 0 518 007 B1**
(45) Veröffentlichungstag und Bekanntmachung des Hinweises auf die Patenterteilung: **18.01.1995**
(21) Anmeldenummer: 92104740.3
(22) Anmeldetag: 19.03.1992
(51) Int. Cl.: F24H 3/04

(54) **Brennereinrichtung**
Burner device
Installation de brûleur

(30) Priorität: 12.06.1991 DE 4119278
(43) Veröffentlichungstag der Anmeldung: 16.12.1992
(73) Patentinhaber: Steinfath, Walter, D-22761 Hamburg (DE)
(72) Erfinder: Steinfath, Walter, D-22761 Hamburg (DE)
(74) Vertreter: Patentanwälte Hauck, Graalfs, Wehnert, Döring, Siemons

(56) Entgegenhaltungen:
- DE-U- 8 625 232
- FR-A- 1 407 322
- US-A- 4 286 943

## Beschreibung

Gegenstand der Erfindung ist eine Brennereinrichtung zum Aufheizen von Abgas einer Gasturbine für die Beheizung eines Abhitzekessels nach dem Oberbegriff des Anspruches 1.

Es ist schon bekannt, die Abgase einer Gasturbine für die Beheizung eines Abhitzekessels zu nutzen, der seinerseits Dampf für die Versorgung von Dampfturbinen, zur Beheizung oder für Prozeßzwecke zur Verfügung stellen kann. Die Austrittstemperatur des Abgases der Gasturbine reicht jedoch vielfach für die Erzeugung eines Dampfes mit zweckentsprechendem Zustand nicht aus. Außerdem kann die Abgasmenge zeitlichen Schwankungen unterliegen, so daß der Abhitzekessel keine gleichmäßige Dampfmenge erzeugt, die für den Betrieb vieler Dampfverbraucher, z.B. einer Dampfturbine, notwendig ist. Andererseits kann der Dampfbedarf schwanken und seine Deckung durch einen konstanten Abgasstrom der Gasturbine nicht gesichert sein. Schließlich kann ein Dampfbedarf auch bei Nichtvorliegen eines Abgasstromes vorhanden sein, um einen Dampfverbraucher in Stillstandszeiten der Gasturbine zu betreiben. Deshalb ist es bei der Abhitzewertung schon bekannt geworden, eine Zusatzfeuerung mit Öl oder Gas vorzusehen, die bei entsprechender Steuerung eines gleichmäßige Dampferzeugung gewährleistet.

Aus der DE-U-8 625 232 ist eine Brennereinrichtung der eingangs genannten Art bekannt. Bei dieser Einrichtung enden das innere und das äußere Brennkammerrohr etwa an derselben Axialposition. Daran schließt sich die Brennkammer an. Infolgedessen werden primäre, sekundäre und tertiäre Abgasteilströme an der Mündung der Brennerrohre praktisch in derselben Querschnittsebene des Kanals eingespeist. Die durch einstellbare Leitflächen bewirkte Aufteilung in Teilströme wird durch deren Zusammenführung in praktisch denselben Kanalquerschnitt zu einem beträchtlichen Teil wieder aufgehoben. Eine Anpassung des Brennerbetriebs an anfallende Abgasmengen bzw. eine erforderliche Wärmeleistung ist deshalb nur in einem eingeschränkten Rahmen möglich.

Davon ausgehend liegt der Erfindung die Aufgabe zugrunde, eine Brennereinrichtung der eingangs genannten Art so zu verbessern, daß sie besser auf zur Verfügung stehende Abgasmengen bzw. erforderliche Heizleistungen einstellbar ist.

Die Lösung dieser Aufgabe ist im Anspruch 1 angegeben. Zweckmäßige Ausgestaltungen sind in den Unteransprüchen enthalten.

Wird die erfindungsgemäße Brennereinrichtung mit Turbinenabgas betrieben, so wird dieses grundsätzlich in drei Teilströme aufgeteilt. Ein erster Teilstrom gelangt durch die innere Öffnung in das innere Brennkammerrohr (Primärteil) und von dort in die dahinter befindliche Brennkammer. Ein zweiter Teilstrom tritt durch die äußere Öffnung des äußeren Brennkammerrohres (Sekundärteil) ein und gelangt durch einen Ringspalt zwischen diesem und dem inneren Brennkammerrohr ebenfalls in die Brennkammer. In dieser wird der durch den vorzugsweise kombinierten Gas/Ölbrenner zugeführte Brennstoff mit einem Luftüberschuß von ca. 30 bis 40 % vollständig verbrannt. Bevorzugt sind die inneren und äußeren Öffnungen mit Drallkörpern versehen, die den beiden Abgasteilströmen einen Drall aufgeben, der sich günstig auf die Flammenstruktur auswirkt. Ein dritter Teilstrom des relativ kalten Turbinengases gelangt durch den Ringspalt zwischen äußerem Brennkammerrohr und Innenwand des Abgaskanals und danach durch die mindestens eine Einlaßöffnung in das äußeres Brennkammerrohr und vermischt sich am Ende der Brennkammer mit den daraus stammenden heißen Rauchgasen. Durch die Einmischung des dritten Teilstroms am Ende der Brennkammer wird die Einstellbarkeit der Brennereinrichtung auf den Abgasmengenstrom bzw. im Hinblick auf eine geforderte Heizleistung verbessert. Zum Einspeisen des dritten Teilstromes kann das äußere Brennkammerrohr auch an seinem vorderen Ende zur Innenwand des Kanals hin geschlossen sein. Das Gemisch hat die gewünschte und insbesondere mittels der verstellbaren Öffnungen und die Zuführung des Brennstoffes sowie der Verbrennungsluft steuerbare Temperatur. Das Temperaturprofil schwankt in einem sehr engen Bereich, z.B. von ± 30°C.

Bei Betrieb ohne Turbinenabgas wird die Zuführungsleitung von der Turbine zur Brennereinrichtung geschlossen und vor der Brennereinrichtung über ein Frischluftgebläse Verbrennungsluft eingespeist. Der gesamte Verbrennungsluftstrom wird durch Luftklappen gesteuert der Brennereinrichtung zugeführt. Dort wird er in zwei Ströme aufgeteilt, wozu die äußeren Öffnungen des Sekundärteils geschlossen werden. Ein erster Teilstrom gelangt durch die inneren Öffnungen in den Primärteil des Brenners. Sein Anteil ist so groß, daß der Brennstoff mit einem Luftüberschuß von ca. 30 % verbrennt. Ein zweiter Teilstrom der relativ kalten Verbrennungsluft gelangt durch den Ringspalt und danach in die Einlaßöffnungen zum Ende der Brennkammer, wo er mit den heißen Abgasen der Verbrennung in der Mischzone zusammengeführt wird und ein relativ gleichmäßiges Temperaturprofil vorliegt.

Sowohl im Turbinenabgasbetrieb als auch im Frischluftbetrieb begünstigt die Aufteilung der Abgas- bzw. Verbrennungsluftströme den Verbrennungs- und den gesamten Mischvorgang. Hierzu sind ferner besondere Änderungen der Querabmessungen des inneren und äußeren Brennkammerrohres vorgesehen.

Die Erfindung ermöglicht einen relativ einfachen und günstigen konstruktiven Aufbau, weil sie im wesentlichen aus einem Abgaskanalstück, der eingebauten Brennkammer aus innerem und äußerem Brennkammerrohr und einem Brenner gegebenenfalls herkömmlicher Bauweise besteht. Sie ist in vorhandene Abgaskanäle integrierbar. Der Kanalbrenner kann mit Öl und/oder Gas versorgt werden.

Weitere Einzelheiten und Vorteile der Erfindung ergeben sich aus der nachfolgenden Beschreibung der zugehörigen Zeichnung, die eine bevorzugte Ausführungsform im Längsschnitt zeigt.

Die Brennereinrichtung hat einen Abgaskanal 1 mit kreisrundem Querschnitt, die mit einer Außenisolierung 2 versehen ist. In den Abgaskanal 1 ist zentral ein Brenner 3 eingesetzt, der über Zuführleitungen 4 für Gas, Öl und Dampf von außen versorgt wird. Der Brenner 3 hat typischerweise einen Durchmesser von 1,40 m und ist in Strömungsrichtung hinten mit einem Konus 5 versehen. Vorn trägt er Brennerdüsen 6 mit einer Öllanze 6′ dazwischen, die achsparallel ausgerichtet sind und deren Länge etwa der halben Länge des Brenners 3 entspricht.

Außerdem ist vorn an den Brenner ein die Brennerdüse 6 umgebender Ringkörper 7 angeflanscht, der Einlaßöffnungen 8 aufweist, die mit von außen verstellbaren Drallkörpern abgegrenzt werden.

Anderenends hat der Ringkörper 7 ein inneres Brennkammerrohr 9 angeflanscht, welches die Brennerdüsen 6 umgibt und sich axial bis zu deren vorderen Öffnungen erstreckt. Das innere Brennkammerrohr 9 weist einen in Strömungsrichtung sich verjüngenden ersten Abschnitt 10 und dahinter einen zweiten Abschnitt 11 konstanter Querabmessungen auf. Es hat an seinem inneren Ende einen nach außen vorstehenden Flansch 12, der etwas in Strömungsrichtung gebogen ist.

Der Flansch 12 ist vorn mit einem äußeren Ringkörper 13 verbunden, dessen äußere Öffnungen 14 mit Drallkörpern von außen verstellbar sind. Die Ringkörper 8 und 14 können auch als Register bezeichnet werden. Der Ringkörper 14 umgibt das innere Brennkammerrohr 9 bei einigem Abstand, so daß dazwischen ein Strömungsspalt ausgebildet ist.

Vorn an den Ringkörper 14 ist ein äußeres Brennkammerrohr 15 geflanscht, welches hinter einem kurzen Zylinderabschnitt einen etwa am vorderen Ende des inneren Brennkammerrohres 9 beginnenden ersten Abschnitt 16 hat, der sich in Strömungsrichtung nach außen konisch erweitert. Die Ringkörper 8 und 14 können als Teil des sie fortsetzenden Mantels der inneren und äußeren Brennkammerrohre 9, 15 angesehen werden. Das innere Brennkammerrohr hat vorne einen Innendurchmesser von 0,85 m und das äußere Brennkammerrohr weist an dieser Stelle einen Innendurchmesser von 2 m auf. An seinem vorderen Ende hat der konische erste Abschnitt 16 einen Durchmesser von 3,06 m.

An den ersten Abschnitt 16 schließt sich ein zylindrischer zweiter Abschnitt 17 des äußeren Brennkammerrohres 15 an, der etwa in seiner vorderen Hälfte Einlaßöffnungen 18 aufweist. Die Einlaßöffnungen 18 laufen in zwei gegeneinander versetzten Reihen um und verbinden das innere des äußeren Brennkammerrohres 15 mit einem Ringspalt 19 zwischen ihm und einer Innenwand des Abgaskanals 1.

An seinem vorderen Ende ist das äußere Brennkammerrohr 15 zur Innenwand des Abgaskanals hin geschlossen und mit einem an der Innenwand abdichtend anliegenden Rohrmantel 20 von ca. 3,4 m Innendurchmesser verbunden, der die Konstruktion im Abgaskanal 1 hält.

Eingangsseitig, d.h. in das linke Ende gemäß Zeichnung gelangt ein durch einen Pfeil A symbolisiertes Turbinenabgas in die Brennereinrichtung, welches typischerweise 230 000 Nm³/h bei einer Temperatur von 513°C mit einem Sauerstoffgehalt von 14 % bei einer Leistung von 48 MW aufweist. Das Abgas A umströmt den Brenner 3 und wird dann in drei Teilströme T1, T2 und T3 zerlegt.

Der erste Teilstrom T1 von typischerweise 20 000 Nm³/h wird mittels der inneren Öffnungen 8 eingestellt und gelangt mit einem aufgebrachten Drall an den Brennerdüsen 6 vorbei in die vorgelagerte Brennkammer, die im Zentrum Z eine Verbrennungstemperatur von etwa 1500°C erreicht.

Für die Verbrennng wird dem Brenner 3 ein Gasstrom G von etwa 1300 Nm³/h zugeführt, was einer Leistung von 13 MW entspricht. Durch die Zuleitungen 4 kann auch Dampf eingespeist werden, um Schweröl vor dem Verbrennen zu zerstäuben.

Der zweite Teilstrom T2 wird durch die äußeren Öffnungen 14 so eingestellt, daß er z.B. 100 000 Nm³/h hat. Ihm wird ebenfalls ein Drall aufgebracht und er gelangt durch den Ringspalt zwischen innerem und äußerem Brennkammerrohr in die Außenbezirke der Brennkammer hinein. Das äußere Brennkammerrohr nimmt in seinem konischen Abschnitt 16 typischerweise eine Wandtemperatur von etwa 650°C an.

Ein dritter Teilstrom T3 von beispielsweise 110 000 Nm³/h wird schließlich durch die 2 x 56 Einlaßöffnungen 18 mit einem Durchmesser von jeweils 0,2 m in den Rauchgasstrom eingemischt, so daß ein Abgasstrom B mit einer Temperatur von 620°C und 61 MW Leistung die Brennereinrichtung zwecks Beheizung eines Abhitzekessels verläßt.

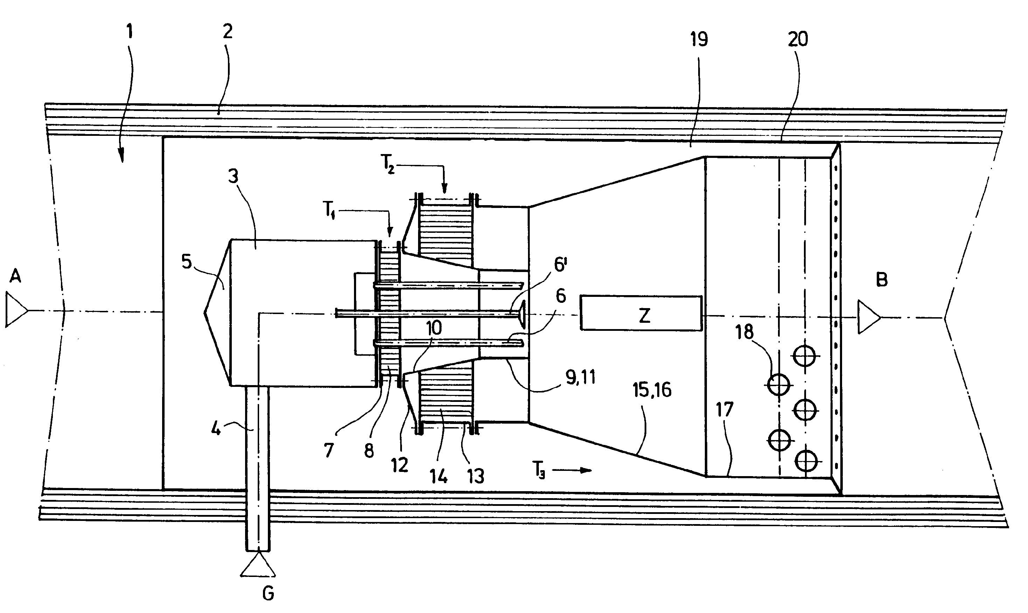

## Patentansprüche

1. Brennereinrichtung zum Aufheizen von Abgas einer Gasturbine für die Beheizung eines Abhitzekessels, bei der ein Abgaskanal (1) ein zentrales, in Achsrichtung weisendes inneres Brennkammerrohr (9) und ein dieses umgebendes und einen Ringspalt (19) innen abgrenzendes äußeres Brennkammerrohr (15) enthält, das innere und das äußere Brennkammerrohr (9, 15) an ihrem hinteren Ende geschlossen sind und mindestens eine konzentrische, von außen verstellbare innere und äußere Öffnung (8, 14) haben, das äußere Brennkammerrohr (15) an seinem vorderen Ende mindestens eine den Ringspalt (19) mit seinem inneren verbindende Einlaßöffnung (18) hat, und in eine an das innere Brennkammerrohr (9) grenzende Brennkammer mindestens eine etwa in der vorderen Öffnung des inneren Brennkammerrohres (9) mündende Brennerdüse (6) gerichtet ist, dadurch gekennzeichnet, daß sich das äußere Brennkammerrohr (15) über das innere Brennkammerrohr (9) hinaus um die Brennkammer erstreckt, und die Einlaßöffnung (18) den zwischen Innenwand des Abgaskanals (1) und äußerem Brennkammerrohr (15) angeordneten Ringspalt (19) mit dem vorderen Ende der Brennkammer verbindet.

2. Brennereinrichtung nach Anspruch 1, dadurch gekennzeichnet, daß das äußere Brennkammerrohr (15) an seinem vorderen Ende zur Innenwand des Kanals (1) hin geschlossen ist.

3. Brennereinrichtung nach Anspruch 1 oder 2, dadurch gekennzeichnet, daß der eine nach hinten gerichtete Verjüngung (5) aufweisende Brenner (3) mit dem hinteren Ende des inneren Brennkammerrohres (9) verbunden ist und dieses verschließt.

4. Brennereinrichtung nach einem der Ansprüche 1 bis 3, dadurch gekennzeichnet, daß das innere Brennkammerrohr (9) einen Flansch (12) hat, der randseitig mit dem äußeren Brennkammerrohr (15) verbunden ist und es an seinem hinteren Ende schließt.

5. Brennereinrichtung nach einem der Ansprüche 1 bis 4, dadurch gekennzeichnet, daß die verstellbaren inneren und äußeren Öffnungen (8, 14) auf dem Mantel des inneren und äußeren Brennkammerrohres (9, 15) angeordnet sind.

6. Brennereinrichtung nach einem der Ansprüche 1 bis 5, dadurch gekennzeichnet, daß die inneren und äußeren Öffnungen (8, 14) von außen verstellbare Drallkörper haben.

7. Brennereinrichtung nach einem der Ansprüche 1 bis 6, dadurch gekennzeichnet, daß hinter der verstellbaren inneren Öffnung (8) ein sich in Strömungsrichtung verjüngender erster Abschnitt (10) und dahinter ein zweiter Abschnitt (11) konstanter Querabmessungen des inneren Brennkammerrohres (9) angeordnet sind.

8. Brennereinrichtung nach einem der Ansprüche 1 bis 7, dadurch gekennzeichnet, daß hinter der verstellbaren äußeren Öffnung (14) ein sich in Strömungsrichtung erweiternder erster Abschnitt (16) und dahinter ein die Einlaßöffnungen (18) enthaltender zweiter Abschnitt (17) konstanter Querabmessungen des äußeren Brennkammerrohres (15) angeordnet sind.

9. Brennereinrichtung nach einem der Ansprüche 1 bis 8, dadurch gekennzeichnet, daß zwei Reihen Einlaßöffnungen (18) auf dem Umfang des äußeren Brennkammerrohres (15) umlaufen, die zueinander um einen halben Einlaßöffnungs-Abstand versetzt sind.

10. Brennereinrichtung nach einem der Ansprüche 1 bis 9, dadurch gekennzeichnet, daß das äußere Brennkammerrohr (15) einen von seinem vorderen Ende aus nach hinten gerichteten äußeren Rohrmantel (20) hat, der an der Innenwand des Abgaskanals (1) anliegt.

11. Brennereinrichtung nach einem der Ansprüche 1 bis 10, dadurch gekennzeichnet, daß der Brenner (3) mit Gas und/oder Öl betrieben ist.

12. Brennereinrichtung nach Anspruch 11, dadurch gekennzeichnet, daß die Brennstoffdüse (6′) bei Betrieb mit Schweröl eine Dampfeinspeisung hat.

## Claims

1. A burner device for heating exhaust gases of a gas turbine for the heating of a waste heat boiler, wherein an exhaust gas passage (1) includes a central, axially extending internal combustion chamber tube (9) and an external combustion chamber tube (15) surrounding the former and internally delimiting an annular gap (19), the internal and external combustion chamber tubes (9,15) are closed at their upstream ends and are provided with at least one concentric, externally adjustable, internal and external port (8,14), the external combustion chamber (15) has at its downstream end at least one inlet orifice (18) communicating the annular gap (19) with its interior, and at least one burner nozzle (6) opening substantially into the downstream end of the internal combustion chamber tube (9) is directed into a combustion chamber adjacent the internal combustion chamber tube (9), characterized in that the external combustion chamber tube (15) extends beyond the internal combustion chamber tube (9) and about the combustion chamber, and that the inlet orifice (18) communicates the annular gap (19) arranged between the internal wall of the exhaust gas passage (1) and the external combustion chamber tube (15) with the downstream end of the combustion chamber.

2. A burner device according to claim (1), characterized in that the external combustion chamber tube (15) is closed at its downstream end with respect to the internal wall of the passage (1).

3. A burner device according to claim 1 or claim 2, characterized in that the burner (3) having a taper (5) extending in an upstream direction is connected to the upstream end of the internal combustion chamber tube (9) so as to close the latter.

4. A burner device according to any of claims 1 to 3, characterized in that the internal combustion chamber tube (9) has a flange (12) which has its rim connected to the external combustion chamber tube (15) so as to close the latter at its upstream end.

5. A burner device of any of claims 1 to 4, characterized in that the adjustable internal and external ports (8, 14) are disposed on the casing of the internal and external combustion chamber tubes (9,15).

6. A burner device according to any of claims 1 to 5, characterized in that the internal and external ports (8, 14) have externally adjustable vortex members.

7. A burner device according to any of claims to 6, characterized in that downstream of the adjustable internal port (8) there is disposed a first portion (10) tapering in the flow direction and downstream thereof there is disposed a second portion (11) of uniform cross section of the internal combustion chamber tube (9).

8. A burner device according to any of claims 1 to 7, characterized in that downstream of the adjustable external port (14) there is disposed a first portion (16) diverging in the flow direction and downstream thereof there is disposed a second portion (17) of uniform cross section of the external combustion chamber tube (15), which second portion comprises said inlet orifices (18).

9. A burner device to any of claims 1 to 8, characterized in that a pair of rows of inlet orifices (18) circumferentially extend about the external combustion chamber tube (15) and are offset with respect to each other for half the spacing of the inlet orifices.

10. A burner device according to any of claims 1 to 9, characterized in that the external combustion chamber tube (15) has an external tube jacket (20) extending from its downstream end in an upstream direction and being in engagement with the internal wall of the exhaust gas passage (1).

11. A burner device according to any of claims 1 to 10, characterized in that the burner (3) is operated by gases and/or oil.

12. A burner device according to claim 11, characterized in that the fuel nozzle (6′) has a vapor supply when operated by heavy oil.

## Revendications

1. Installation de brûleur pour surchauffer des gaz d'échappement d'une turbine à gaz destinés à chauffer une chaudière de récupération, dans laquelle un conduit de gaz d'échappement (1) comprend un tube central intérieur de chambre de combustion (9) disposé axialement, un tube extérieur de chambre de combustion (15) et un passage annulaire (19), entourant celui-ci, les tubes intérieur et extérieur de chambre de combustion (9,15) étant fermés à leur extrémité arrière et, comportant au moins une ouverture (8,14) concentrique, intérieure et extérieure réglable de l'extérieur, le tube extérieur de chambre de combustion (15) comporte à son extrémité avant au moins une ouverture d'admission (18) reliant le passage annulaire (19) avec l'intérieur de ce tube, et au moins une buse de brûleur (6) débouchant à peu près dans l'ouverture avant du tube intérieur de chambre de combustion (9) est dirigée vers une chambre de combustion qui est limitée par ledit tube intérieur (9), caractérisée en ce que le tube de chambre de combustion extérieur (15) se prolonge au délà du tube de chambre de combustion intérieur (9) autour de la chambre de combustion et en ce que l'ouverture d'admission (18) relie le passage annulaire (19), situé entre la paroi intérieure du conduit d'échappement des gaz (1) et le tube extérieur de chambre de combustion (15), à l'extrémité avant de combustion.

2. Installation de brûleur selon la revendication 1, caractérisée en ce que le tube de chambre de combustion extérieur (15) est fermé à son extrémité avant vers la paroi intérieure du conduit (1).

3. Installation de brûleur selon la revendication 1 ou la revendication 2, caractérisée en ce que le brûleur (3) qui est en forme de cône à pointe vers l'arrière (5) est relié avec l'extrémité arrière du tube intérieur de chambre de combustion (9) et ferme celui-ci.

4. Installation de brûleur selon l'une quelconque des revendications 1 à 3, caractérisée en ce que le tube intérieur de chambre de combustion (9) porte une bride (12) dont le bord est relié avec le tube de chambre de combustion extérieur (15) et le ferme à son extrémité arrière.

5. Installation de brûleur selon l'une quelconque des revendications 1 à 4, caractérisée en ce que les ouvertures (8,14) réglables intérieures et extérieures sont disposées sur la chemise des tubes de chambre de combustion extérieur et intérieur (9,15).

6. Installation de brûleur selon l'une quelconque des revendicatioon 1 à 5, caractérisée en ce que les ouvertures intérieures et extérieures (8,14) comporte des éléments tournants réglables de l'extérieur.

7. Installation de brûleur selon l'une quelconque des revendications 1 à 6, caractérisée en ce que derrière l'ouverture intérieure réglable (8) se trouve une première partie conique (10) qui se retrécit dans le sens d'écoulement et ensuite une deuxième partie (11) de section constante du tube intérieur de chambre de combustion (9).

8. Installation de brûleur selon l'une quelconque revendications 1 à 7, caratérisée en ce que derrière l'ouverture extérieure réglable (14) se trouve une prémière partie (16) qui s'élargit dans le sens d'écoulement et ensuite une deuxième partie (17) de section constante, du tube extérieur de chambre de combustion (15), contenant les ouvertures d'admission (18).

9. Installation de brûleur selon l'une quelconque des revendications 1 à 8, caractérisée en ce que deux rangées d'ouvertures d'admission (18) sont situées sur le périmètre du tube extérieur de chambre de combustion (15), décalées l'une par rapport à l'autre d'une moitié de la distance entre les ouvertures d'admission.

10. Installation de brûleur selon l'une quelconque des revendication 1 à 9, caractérisée en ce le tube extérieur de chambre de combustion (15) porte une chemise de tube (20) qui va de l'extrémité avant vers l'arrière, on contact avec la paroi intérieure du conduit d'échappement des gaz (1).

11. Installation de brûleur selon l'une quelconque des revendication 1 à 10, caractérisée en ce que le brûleur (3) peut fonctionner avec du gaz et/ou de l'huile.

12. Installation de brûleur selon la revendication 11, caractérisée en ce que la buse de brûleur (6) comporte une alimentation en vapeur lorsqu'elle fonctionne avec de l'huile lourde.
